# FASCICULE DE BREVET EUROPEEN

(11) **EP 2 783 772 B1**
(45) Date de publication et mention de la délivrance du brevet: **25.05.2016**
(21) Numéro de dépôt: 14162250.6
(22) Date de dépôt: 28.03.2014
(51) Int. Cl.: B21D 53/88, B62D 1/16

(54) **Procédé de fabrication d'une colonne de direction avec tube à paroi mince, et colonne obtenue par un tel procédé**
Verfahren zum Herstellen einer Lenkwelle mit verringerter Wanddicke sowie dadurch hergestellte Lenkwelle
Method for manufacturing a steering shaft with reduced thickness wall and steering shaft obtaned by such a method

(30) Priorité: 28.03.2013 FR 1352820
(43) Date de publication de la demande: 01.10.2014
(73) Titulaire: Fuji Autotech France SAS, 25350 Mandeure (FR)
(72) Inventeur: Coley, Pascal, 25260 Saint Maurice Colombier (FR)
(74) Mandataire: Blot, Philippe Robert Emile

(56) Documents cités:
- EP-A1- 0 640 414
- GB-A- 2 486 224
- JP-A- 2008 302 751

## Description

L'invention concerne en général les colonnes de direction de véhicule.

Plus précisément, l'invention concerne selon un premier aspect un procédé de fabrication d'une colonne de direction.

Une telle colonne comprend fréquemment un corps de colonne ayant la forme d'un tube et un arbre de direction lié au volant du véhicule. Le corps de colonne est lié à la structure du véhicule. L'arbre est engagé dans le tube avec interposition d'un ou plusieurs organes de guidage en rotation de l'arbre par rapport au tube. Le diamètre extérieur du tube est imposé, car le tube doit recevoir extérieurement une pièce en plastique qui sera centrée sur le diamètre extérieur du tube. Cette pièce est ainsi maintenue en position par le tube. Par exemple, cette pièce porte des commandes sous volant telles que les commandes des phares, des clignotants, de la radio, etc.

De manière à obtenir une bonne rigidité pour la colonne de direction, il est nécessaire que l'arbre ait un diamètre extérieur le plus grand possible, que l'organe de guidage ait un diamètre extérieur le plus grand possible, et que le tube ait une épaisseur qui soit également la plus grande possible.

Par exemple, le diamètre extérieur du tube est imposé à une valeur de 48 mm. Le diamètre extérieur de l'axe doit être supérieur ou égal à 30 mm, et le diamètre extérieur du roulement doit être supérieur ou égal à 44 mm. L'empilement des cotes fait qu'au niveau du roulement le tube présente une épaisseur de matière de 2 mm au maximum. Ceci est insuffisant pour assurer une rigidité satisfaisante de la colonne de direction.

Dans ce contexte, l'invention vise à proposer un procédé de fabrication permettant d'obtenir une colonne de direction ayant une meilleure rigidité.

A cette fin, l'invention porte sur un procédé de fabrication d'une colonne de direction, le procédé comprenant les étapes suivantes :
- obtenir un tube, le tube ayant un axe central et présentant des première et seconde extrémités axiales, le tube ayant au moins une surface radialement interne ;
- refoulement d'une matière constituant le tube, le long d'un tronçon d'extrémité de la surface radialement interne située à la première extrémité du tube, la matière étant repoussée vers la seconde extrémité du tube de telle sorte que le tube le long du tronçon d'extrémité présente une épaisseur initiale avant l'étape de refoulement et une épaisseur finale inférieure à l'épaisseur initiale après l'étape de refoulement ;
- mise en place d'un arbre à l'intérieur du tube et d'un organe de guidage en rotation de l'arbre par rapport au tube, l'organe de guidage étant serré radialement entre l'arbre et le tronçon d'extrémité de la surface interne.

Ainsi, l'épaisseur du tube est réduite, localement, le long du tronçon d'extrémité. En revanche, le tube peut avoir une épaisseur plus élevée partout ailleurs, et présenter ainsi une rigidité suffisante. Le fait de réduire l'épaisseur du tube au droit de l'organe de guidage en rotation permet de respecter les exigences dimensionnelles énoncées plus haut, notamment quant au diamètre extérieur du tube, au diamètre extérieur de l'arbre, et au diamètre extérieur de l'organe de guidage.

Le tube est typiquement un corps de colonne. Le corps de colonne est lié à la structure du véhicule par l'intermédiaire d'un dispositif de liaison permettant par exemple de régler la position du corps de colonne. En variante, le tube n'est pas un corps de colonne.

L'arbre est typiquement un arbre de direction. L'arbre de direction est typiquement lié en rotation au volant du véhicule par une première extrémité. Par une seconde extrémité opposée à la première, l'arbre de direction est lié à une crémaillère permettant de faire pivoter les roues avant du véhicule en rotation autour d'axes verticaux.

En variante, l'arbre est un axe autre qu'un arbre de direction.

L'organe de guidage en rotation est typiquement un roulement. Le roulement est par exemple un roulement à billes, ou un roulement à aiguilles, ou tout autre type de roulement adapté.

Le roulement comporte une couronne extérieure plaquée contre la surface interne du tube. Plus précisément, la couronne extérieure est serrée contre le tronçon d'extrémité. La couronne extérieure est engagée contre la surface interne, avec une force telle qu'elle n'a aucun degré de liberté par rapport au tube.

L'organe de guidage comporte encore une couronne interne entourant l'arbre, et serrée contre cet arbre. Des organes de roulement sont interposés entre les couronnes interne et externe. La couronne interne est solidaire de l'arbre et n'a aucun degré de liberté par rapport à l'arbre.

L'étape de refoulement de matière consiste à repousser la matière constituant la surface radialement interne du tube. La matière constituant la surface radialement externe du tube n'est pas repoussée. Cette opération se fait sans changement de diamètre externe du tube.

Cette opération entraîne seulement une réduction de l'épaisseur du tube le long du tronçon d'extrémité. On entend par épaisseur de matière l'écartement radial entre la surface radialement externe et la surface radialement interne du tube.

La matière est refoulée seulement le long du tronçon d'extrémité.

Typiquement, l'organe de guidage est d'abord engagé dans le tube. Ensuite, l'arbre est placé à l'intérieur de l'organe de guidage.

Alternativement, l'arbre est mis en place à l'intérieur du tube puis l'organe de guidage en rotation est monté entre l'arbre et le tube.

Suivant encore une autre variante, l'organe de guidage est d'abord monté autour de l'arbre, et l'arbre et l'organe de guidage sont montés ensemble à l'intérieur du tube.

L'opération de refoulement de matière permet d'obtenir une excellente circularité au niveau du tronçon d'extrémité.

Ceci est obtenu de manière économique, puisque l'opération de refoulement de matière est beaucoup moins onéreuse qu'un usinage du tube. Il n'y a pas d'enlèvement de matière au cours du refoulement.

Selon une caractéristique avantageuse de l'invention, au moins une partie de la matière repoussée forme un bourrelet en saillie par rapport à la surface radialement interne.

Ainsi, le bourrelet définit avantageusement une butée axiale pour l'organe de guidage.

Cette butée permet de limiter les déplacements axiaux de l'organe de guidage à l'intérieur du tube lors du fonctionnement du véhicule, vers la seconde extrémité.

Selon une autre caractéristique avantageuse de l'invention, le tube présente le long du tronçon d'extrémité un diamètre externe initial avant l'étape de refoulement et un diamètre externe final après l'étape de refoulement, le diamètre final étant compris entre le diamètre initial - 10% et le diamètre initial +10%, de préférence entre le diamètre initial - 5% et le diamètre initial +5% et encore de préférence entre le diamètre initial -1% et le diamètre final +1 %.

Ainsi, le refoulement de matière se fait à diamètre externe du tube sensiblement constant, voire même sans changement de diamètre.

Selon une autre caractéristique avantageuse de l'invention, le tube est obtenu à partir d'un flanc métallique présentant des premier et second bords axiaux, le premier bord axial portant des agrafes, le second bord axial présentant des encoches, le tube étant obtenu en roulant le flanc métallique de manière à juxtaposer les premier et second bords axiaux, les agrafes étant engagées dans les encoches.

On entend ici par agrafes des zones du flanc métallique qui sont en saillie par rapport au premier bord axial, ces zones étant typiquement obtenues par découpe du flanc métallique. Les agrafes sont venues de matière avec le premier bord axial. Les agrafes sont par exemple régulièrement réparties le long du premier bord axial. Elles présentent toutes sortes de formes. Par exemple, chaque agrafe présente une forme ovale ou elliptique, avec une partie terminale relativement plus large raccordée au premier bord axial par une base relativement moins large. En variante, chaque agrafe présente la forme d'une languette rectangulaire, l'agrafe ayant sensiblement une largeur constante. On entend ici par largeur la dimension de l'agrafe parallèlement au premier bord axial.

Les encoches sont découpées dans le second bord axial. Elles sont débouchantes au niveau du second bord axial. Elles présentent une forme sensiblement conjuguée de celle de l'agrafe. Les agrafes sont engagées en force dans les encoches. Dans le cas où l'agrafe présente une partie terminale relativement plus large et une base relativement plus étroite, l'encoche présente elle aussi une zone de fond relativement plus large débouchant au niveau du second bord axial par un passage relativement plus étroit.

Typiquement, les agrafes portées par le premier bord axial délimitent entre elles une seconde série d'encoches. Par ailleurs, les encoches ménagées dans le second bord axial délimitent entre elles une seconde série d'agrafes. Quand le flanc métallique est roulé et les agrafes engagées dans les encoches, la seconde série d'agrafes est également engagée dans la seconde série d'encoches.

En variante, le tube n'est pas du type roulé agrafé. Il est par exemple du type roulé soudé, ou est obtenu par tout autre procédé adapté.

Selon une caractéristique avantageuse de l'invention, une partie de la matière à l'étape de refoulement est repoussée dans des interstices entre les agrafes et des bords des encoches.

En effet, la forme des encoches ne correspond jamais exactement à la forme des agrafes, de telle sorte qu'il subsiste toujours un léger interstice entre les agrafes et les bords délimitant les encoches. A l'étape de refoulement de la matière, une partie de cette matière vient combler les interstices. Ceci contribue à renforcer la liaison entre les deux bords axiaux du tube.

Typiquement, sur les tubes de type roulé agrafé, les agrafes sont solidarisées au bord des encoches par un ou plusieurs points de soudure. Dans l'invention, du fait que les interstices sont comblés par la matière refoulée, il est possible de ne pas solidariser les agrafes au bord des encoches par des points de soudure.

En variante, on prévoit les points de soudure en plus de l'étape de refoulement de matière.

Selon une caractéristique avantageuse de l'invention, l'étape de refoulement de matière est réalisée en plaçant le tube dans une matrice et en engageant un poinçon à l'intérieur du tube.

Le refoulement de matière est ainsi réalisé de manière simple et économique.

La matrice présente typiquement un logement en creux ayant une forme intérieure correspondant à la forme extérieure de la première extrémité du tube. Le tube est engagé sur au moins une partie de sa longueur dans la matrice, à partir de la première extrémité. Ainsi, le tronçon d'extrémité de la surface radialement interne du tube est entièrement engagé dans la matrice.

Le poinçon est engagé en force à l'intérieur du tube. L'écartement radial entre la surface interne de la matrice et la surface externe du poinçon correspond à l'épaisseur finale recherchée pour le tube le long du tronçon d'extrémité.

En variante, le repoussement de matière est réalisé par tout autre procédé adapté. Selon une autre caractéristique avantageuse de l'invention, l'épaisseur finale est inférieure à 80% de l'épaisseur initiale. De préférence, l'épaisseur finale est comprise entre 50 et 80% de l'épaisseur initiale, encore de préférence entre 50 et 75% de l'épaisseur initiale.

Par exemple, l'épaisseur initiale du tube est comprise entre 2 et 5 mm. L'épaisseur finale du tube est comprise entre 1 et 3 mm.

Selon un second aspect, l'invention porte sur une colonne de direction obtenue selon le procédé ci-dessus.

D'autres caractéristiques et avantages de l'invention ressortiront de la description détaillée qui en est donnée ci-dessous, à titre indicatif, en référence aux figures annexées, parmi lesquelles :
- la figure 1 est une vue en coupe partielle d'une colonne de direction obtenue selon le procédé de l'invention ;
- la figure 2 est une vue en perspective d'une partie d'un tube roulé soudé avant l'étape de refoulement de matière ;
- la figure 3 est une vue en coupe axiale du tube de la figure 2, avant l'étape de refoulement de matière ; et
- la figure 4 est une vue similaire à celle de la figure 3, après l'étape de refoulement de matière, la matrice et le poinçon utilisés pour réaliser le refoulement de matière étant en outre représentés.

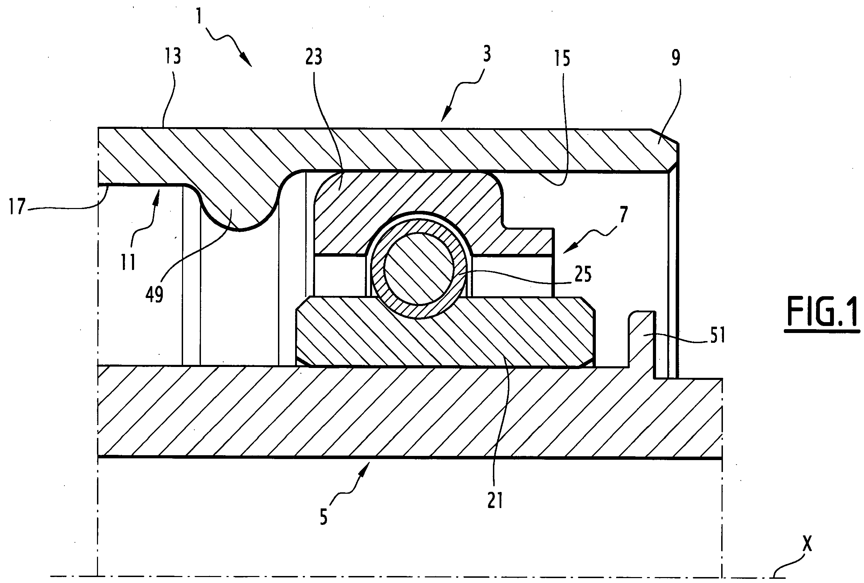

La colonne de direction 1 représentée sur la figure 1 comporte un tube 3 ayant un axe central X, un arbre de direction 5 engagé dans le tube 3, et plusieurs organes de guidage en rotation 7, interposés entre le tube 3 et l'arbre 5.

Le tube 3 est un corps de colonne de direction, lié à la structure du véhicule par l'intermédiaire d'une liaison non représentée. Par exemple, cette liaison autorise un réglage de la position du tube par rapport à ladite structure en hauteur et en profondeur, de manière connue en soi. La liaison est également prévue pour bloquer le tube 3 en position par rapport à la structure à la position souhaitée.

Le tube 3 présente typiquement une section circulaire, et est creux. Il présente des premières et secondes extrémités axiales opposées l'une à l'autre, seule la première extrémité axiale 9 étant représentée sur la figure 1. Le tube 3 est délimité radialement vers l'intérieur par une surface interne 11 et radialement vers l'extérieur par une surface externe 13. La surface interne 11 présente un tronçon d'extrémité 15, s'étendant à partir de la première extrémité 9 du tube. Le premier tronçon d'extrémité 15 se prolonge vers la seconde extrémité du tube par un tronçon central 17.

Le tube 3 présente, le long des tronçons 15 et 17, un diamètre externe sensiblement constant. Dans l'exemple représenté, ce diamètre externe vaut 48 mm. En variante, les tronçons 15 et 17 ont des diamètres externes différents.

Par ailleurs, le long du tronçon d'extrémité 15, le tube présente une épaisseur de matière valant 2 mm. Le tube présente donc, le long du tronçon d'extrémité 15, un diamètre interne valant 44 mm.

Le long du tronçon central 17, le tube présente une épaisseur de matière d'environ 3 mm. Le tube présente donc un diamètre interne le long du tronçon central 17, valant 42 mm.

L'arbre 5 est coaxial au tube 3. Il est relié par une première extrémité au volant du véhicule. A une seconde extrémité opposée à la première, il est lié à une crémaillère permettant de commander l'orientation des roues avant du véhicule. Le conducteur du véhicule en actionnant le volant déplace donc la crémaillère par l'intermédiaire de l'arbre de direction 5. Le volant et la crémaillère ne sont pas représentés sur la figure 1.

L'arbre 5 est guidé en rotation par rapport au tube 3 par l'intermédiaire de plusieurs organes de guidage 7, un seul de ces organes étant représenté sur la figure 1.

Ledit organe 7 est interposé radialement entre l'arbre 5 et le tronçon d'extrémité 15 de la surface interne du tube.

Dans l'exemple représenté, l'organe de guidage en rotation est un roulement à billes. Ce roulement comporte une couronne interne 21 liée en rotation à l'arbre 5, une couronne externe 23 liée au tube 3 et une pluralité de billes 25 interposées entre les couronnes interne et externe.

La couronne interne 21 est serrée contre une surface externe de l'arbre 5, et solidaire en rotation de l'arbre 5. La couronne externe 23 est serrée contre le tronçon d'extrémité 15 et solidaire de celui-ci. La couronne interne 21 est libre en rotation autour de l'axe X par rapport à la couronne externe 23.

La colonne de direction de la figure 1 est obtenue par un procédé de fabrication comprenant les étapes suivantes :
- obtenir le tube 3 ;
- refoulement de la matière constituant le tube 3, le long du tronçon d'extrémité 15 de la surface interne, la matière étant repoussée vers la seconde extrémité du tube de telle sorte que le tube 3 au niveau du tronçon d'extrémité 15 présente une épaisseur initiale avant l'étape de refoulement et une épaisseur finale inférieure à l'épaisseur initiale après l'étape de refoulement ;
- mise en place de l'arbre 5 à l'intérieur du tube 3, et de l'organe 7 de guidage en rotation de l'arbre 5 par rapport au tube 3.

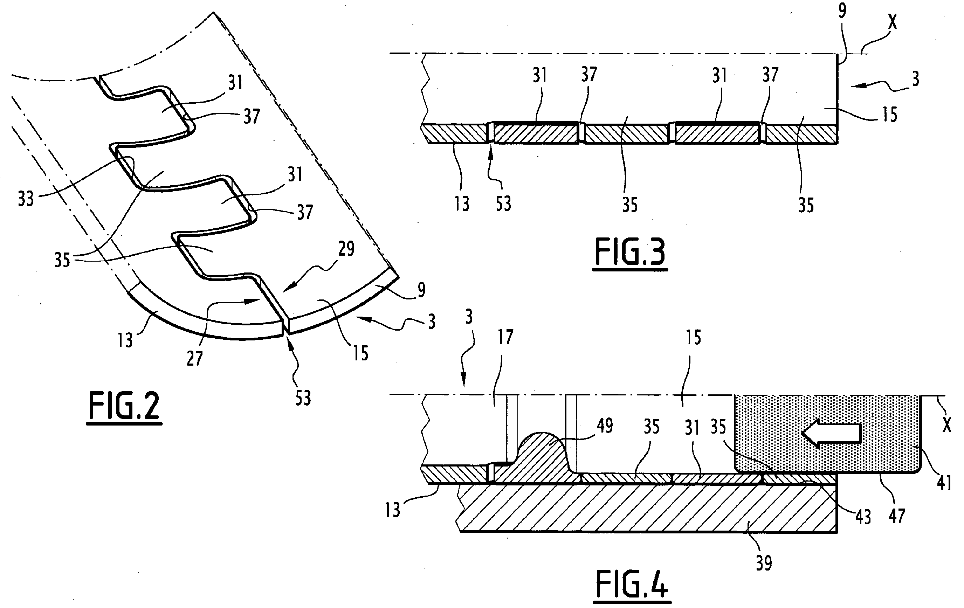

Dans l'exemple représenté sur les figures 2 à 4, le tube 3 est un tube roulé agrafé. Il est obtenu à partir d'un flanc métallique initialement plat, présentant avant roulement des premier et second bords axiaux 27, 29 sensiblement parallèles l'un à l'autre. Le premier bord axial 27 porte une première série d'agrafes 31, faisant saillie par rapport au premier bord axial 27 et s'étendant dans le même plan que le flanc métallique. Les agrafes 31 définissent entre elles une série d'encoches 33. Les agrafes 31 sont venues de matière avec le flanc métallique et sont obtenues par découpe de ce flanc métallique, par exemple par poinçonnage.

Le second bord axial 29 porte une seconde série d'agrafes 35, faisant saillie par rapport au bord 29. Les agrafes 35 sont venues de matière avec le flanc métallique et s'étendent dans le plan de ce flanc métallique. Elles sont obtenues par découpe du flanc métallique. Elles définissent entre elles une série d'encoches 37. Les encoches de la série 33, appelée ici seconde série, présentent une forme conjuguée de celle des agrafes de la seconde série 35. De même, les encoches de la série 37, appelée ici première série, présentent une forme conjuguée des agrafes de la première série 31.

Au cours de l'étape de roulement du flanc métallique, les agrafes 31 de la première série sont engagées en force dans les encoches 37 de la première série, et inversement les agrafes 35 de la seconde série sont engagées en force dans les encoches 33 de la seconde série.

Dans cette situation, représentée sur la figure 2, les premier et second bords axiaux sont juxtaposées l'un le long de l'autre, à proximité immédiate l'un de l'autre.

L'étape de refoulement de matière est réalisée comme représentée sur la figure 4, en utilisant une matrice 39 et un poinçon 41.

Le poinçon 39 présente une cavité interne cylindrique 43, de diamètre interne sensiblement égal au diamètre externe du tube 3. La première extrémité 9 du tube 3 est engagée dans la cavité de la matrice 39. Comme visible sur la figure 4, la portion du tube 3 engagée dans la cavité de la matrice est telle que le tronçon d'extrémité 15 est entièrement logé à l'intérieur de la matrice 39.

Le refoulement de la matière est réalisé en engageant le poinçon 41 à l'intérieur du tube quand celui-ci est en place dans la matrice. Le poinçon 41 présente une forme sensiblement cylindrique, avec un diamètre externe correspondant au diamètre interne final recherché pour le tronçon d'extrémité 15. Ainsi, l'écartement entre la surface externe 47 du poinçon et la surface interne 43 de la matrice correspond sensiblement à l'épaisseur finale recherchée pour le tube le long du tronçon d'extrémité 15. Sous l'effet de l'engagement du poinçon 41 à l'intérieur du tube 3, la matière du tube 3 est repoussée vers la seconde extrémité du tube, et forme un bourrelet de matière 49 à la limite entre le tronçon d'extrémité 15 et le tronçon central 17.

Le bourrelet 49 fait saillie par rapport à la surface interne 11 du tube. Il présente une forme annulaire et s'étend sur toute la périphérie du tube. Ce bourrelet définit donc une butée axiale pour l'organe de guidage 7, vers la seconde extrémité du tube.

Par exemple, comme visible sur la figure 1, l'arbre 5 comporte une saillie annulaire 51, faisant saillie par rapport à la surface externe de l'arbre 5. Cette saillie 51 forme une autre butée axiale pour l'organe de guidage, limitant le déplacement de l'organe de guidage 7 vers la première extrémité du tube. En variante, l'arbre 5 ne comporte pas de saillie annulaire 51.

Comme visible sur la figure 3, avant l'étape de refoulement de matière, il existe un interstice 53 entre les agrafes de la première série et le bord des encoches de la première série, et entre les agrafes de la seconde série et le bord des encoches de la seconde série. Comme le met en évidence la figure 4, lors de l'étape de refoulement, une partie de la matière constituant le tube est repoussée dans l'interstice 53, le long du tronçon d'extrémité. Ceci a pour effet de combler au moins partiellement l'interstice 53, et de renforcer la liaison entre les bords axiaux 27 et 29.

Dans l'exemple représenté, le tube présente le long du tronçon d'extrémité une épaisseur initiale d'environ 3 mm. Après refoulement de matière, le tube présente le long du tronçon d'extrémité une épaisseur de matière d'environ 2 mm.

A l'issue de l'étape de refoulement de matière, l'organe de guidage 7 est mis en place à l'intérieur du tube, en force. La bague externe 23 est ainsi serrée contre le tronçon interne 15 et bloquée en rotation par rapport au tube 3. Puis, l'arbre 5 est engagé à l'intérieur de la bague interne 21 et bloqué en rotation par rapport à la bague 21 par tous moyens adaptés. Par exemple, la bague 21 est montée en force autour de l'arbre 5, ou est montée glissante sur l'arbre avec un ou plusieurs arrêts axiaux tels que des circlips ou des saillies annulaires.

De même, la bague 23 peut être arrêtée axialement par rapport au tube 3 du côté de l'extrémité 9 par réalisation de formes obtenues par raclage, par déformation du tube (ogivage), par pliage de languettes prédécoupées dans le tube, etc.

## Revendications

1. Procédé de fabrication d'une colonne de direction (1), le procédé comprenant les étapes suivantes :
- obtenir un tube (3), le tube (3) ayant un axe central (x) et présentant des première et seconde extrémités axiales, le tube (3) ayant une surface radialement interne (11);
- refoulement d'une matière constituant le tube (3), le long d'un tronçon d'extrémité (15) de la surface radialement interne (11) situé à la première extrémité (9) du tube (3), la matière étant repoussée vers la seconde extrémité du tube (3) de telle sorte que le tube (3) le long du tronçon d'extrémité (15) présente une épaisseur initiale avant l'étape de refoulement et une épaisseur finale inférieure à l'épaisseur initiale après l'étape de refoulement ;
- mise en place d'un arbre (5) à l'intérieur du tube (3) et d'un organe de guidage (7) en rotation de l'arbre (5) par rapport au tube (3), l'organe de guidage (7) étant serré radialement entre l'arbre (5) et le tronçon d'extrémité (15) de la surface interne (11).

2. Procédé selon la revendication 1, **caractérisé en ce qu'**au moins une partie de la matière repoussée forme un bourrelet (49) en saillie par rapport à la surface radialement interne (11).

3. Procédé selon la revendication 2, **caractérisé en ce que** le bourrelet (49) définit une butée axiale pour l'organe de guidage (7).

4. Procédé selon l'une quelconque des revendications précédentes, **caractérisé en ce que** le tube (3) présente le long du tronçon d'extrémité (15) un diamètre externe initial avant l'étape de refoulement et un diamètre externe final après l'étape de refoulement, le diamètre final étant compris entre le diamètre initial -10% et le diamètre initial +10%.

5. Procédé selon l'une quelconque des revendications précédentes, **caractérisé en ce que** le tube (3) est obtenu à partir d'un flanc métallique présentant deux premier et second bords axiaux (27, 29), le premier bord axial (27) portant des agrafes (31), le second bord axial (29) présentant des encoches (37), le tube (3) étant obtenu en roulant le flanc métallique de manière à juxtaposer les premier et second bords axiaux (27, 29), les agrafes (31) étant engagées dans les encoches (37).

6. Procédé selon la revendication 5, **caractérisé en ce qu'**une partie de la matière à l'étape de refoulement est repoussée dans des interstices (53) entre les agrafes (31) et des bords des encoches (37).

7. Procédé selon l'une quelconque des revendications 1 à 4, **caractérisé en ce que** le tube (3) est obtenu à partir d'un flanc métallique présentant des premier et second bords axiaux, le tube (3) étant obtenu en roulant le flanc métallique et en soudant les premier et second bords axiaux l'un à l'autre.

8. Procédé selon l'une quelconque des revendications précédentes, **caractérisé en ce que** l'étape de refoulement de matière est réalisée en plaçant le tube (3) dans une matrice (39) et en engageant un poinçon (41) à l'intérieur du tube (3).

9. Procédé selon l'une quelconque des revendications précédentes, **caractérisé en ce que** l'épaisseur finale est inférieure à 80% de l'épaisseur initiale.

10. Colonne de direction (1) obtenue selon le procédé de l'une quelconque des revendications précédentes.

## Patentansprüche

1. Verfahren zur Herstellung einer Lenksäule (1), wobei das Verfahren die folgenden Schritte aufweist:
- Erlangen eines Rohrs (3), wobei das Rohr (3) eine zentrale Achse (x) hat und ein erstes und ein zweites axiales Ende hat, wobei das Rohr (3) eine radial innere Fläche (11) hat,
- Verdrängen eines das Rohr (3) ausbildenden Materials entlang eines Endabschnitts (15) der radial inneren Fläche (11), der am ersten Ende (9) des Rohrs (3) angeordnet ist, wobei das Material zu dem zweiten Ende des Rohrs (3) hin verschoben wird, sodass das Rohr (3) entlang des Endabschnitts (15) vor dem Schritt des Verdrängens eine Anfangsdicke und nach dem Schritt des Verdrängens eine End-Dicke hat, die kleiner ist als die Anfangsdicke,
- Platzieren einer Welle (5) im Inneren des Rohrs (3) und eines Organs zur Dreh-Führung (7) der Welle (5) bezüglich des Rohrs (3), wobei das Organ zur Führung (7) radial zwischen die Welle (5) und den Endabschnitt (15) der inneren Fläche (11) gepresst ist.

2. Verfahren gemäß Anspruch 1, **dadurch gekennzeichnet, dass** wenigstens eine Teil des verdrängten Materials einen Wulst (49) bildet, der bezüglich der radial inneren Fläche (11) vorsteht.

3. Verfahren gemäß Anspruch 2, **dadurch gekennzeichnet, dass** der Wulst (49) einen axialen Anschlag für das Organ zur Führung (7) definiert.

4. Verfahren gemäß irgendeinem der vorhergehenden Ansprüche, **dadurch gekennzeichnet, dass** das Rohr (3) entlang des Endabschnitts (15) vor dem Schritt des Verdrängens einen Außen-Anfangsdurchmesser hat und nach dem Schritt des Verdrängens einen Außen-Enddurchmesser hat, wobei der Enddurchmesser zwischen dem Anfangsdurchmesser -10% und dem Anfangsdurchmesser +10% liegt.

5. Verfahren gemäß irgendeinem der vorhergehenden Ansprüche, **dadurch gekennzeichnet, dass** das Rohr (3) ausgehend von einer Metallflanke erhalten wird, die zwei, einen ersten und einen zweiten, Axialränder (27, 29) hat, wobei der erste Axialrand (27) Vorsprünge (31) hat, wobei der zweite Axialrand (29) Ausnehmungen (37) hat, wobei das Rohr (3) erhalten wird durch Rollen der Metallflanke in einer Weise, dass der erste und der zweite Axialrand (27, 29) nebeneinander angeordnet werden, wobei die Vorsprünge (31) in die Ausnehmungen (37) eingreifen.

6. Verfahren gemäß Anspruch 5, **dadurch gekennzeichnet, dass** ein Teil des Materials im Schritt des Verdrängens in Zwischenräume (53) zwischen den Vorsprüngen (31) und den Rändern der Ausnehmungen (37) verdrängt wird.

7. Verfahren gemäß irgendeinem der Ansprüche 1 bis 4, **dadurch gekennzeichnet, dass** das Rohr (3) ausgehend von einer Metallflanke erhalten wird, die einen ersten und einen zweiten Axialrand hat, wobei das Rohr (3) erhalten wird durch Rollen der Metallflanke und durch Miteinander-Verschweißen des ersten und des zweiten Axialrands.

8. Verfahren gemäß irgendeinem der vorhergehenden Ansprüche, **dadurch gekennzeichnet, dass** der Schritt des Verdrängens von Material realisiert wird durch Platzieren des Rohrs (3) in einer Matrize und durch In-Eingriff-Bringen eines Dorns (41) in das Innere des Rohrs (3).

9. Verfahren gemäß irgendeinem der vorhergehenden Ansprüche, **dadurch gekennzeichnet, dass** die End-Dicke kleiner ist als 80% der Anfangsdicke.

10. Lenksäule (1), die erhalten ist gemäß dem Verfahren nach irgendeinem der vorhergehenden Ansprüche.

## Claims

1. Method of producing a steering column (1), the method comprising the following steps:
- obtaining a tube (3), the tube (3) having a central axis (x) and having first and second axial ends, the tube (3) having a radially internal surface (11);
- forcing a material constituting the tube (3) along an end section (15) of the radially internal surface (11) disposed at the first end (9) of the tube (3), the material being pushed towards the second end of the tube (3) so that, along the end section (15), the tube (3) has an initial thickness prior to the forcing step and a final thickness that is less than the initial thickness after the forcing step;
- fitting a shaft (5) inside the tube (3) and a member (7) for guiding the shaft (5) in rotation relative to the tube (3), the guiding member (7) being clamped radially between the shaft (5) and the end section (15) of the internal surface (11).

2. Method as claimed in claim 1, **characterised in that** at least some of the pushed material forms a bead (49) protruding out from the radially internal surface (11).

3. Method as claimed in claim 2, **characterised in that** the bead (49) defines an axial stop for the guiding member (7) .

4. Method as claimed in any one of the preceding claims, **characterised in that** along the end section (15), the tube (3) has an initial external diameter prior to the forcing step and a final external diameter after the forcing step, the final diameter being between the initial diameter -10% and the initial diameter +10%.

5. Method as claimed in any one of the preceding claims, **characterised in that** the tube (3) is obtained from a metal blank having two first and second axial edges (27, 29), the first axial edge (27) bearing tabs (31), the second axial edge (29) having notches (37), the tube (3) being obtained by rolling the metal blank so as to juxtapose the first and second axial edges (27, 29), the tabs (31) being engaged in the notches (37).

6. Method as claimed in claim 5, **characterised in that** some of the material in the forcing step is pushed into the interstices (53) between the tabs (31) and the edges of the notches (37).

7. Method as claimed in any one of claims 1 to 4, **characterised in that** the tube (3) is obtained from a metal blank having first and second axial edges, the tube (3) being obtained by rolling the metal blank and by welding the first and second axial edges to one another.

8. Method as claimed in any one of the preceding claims, **characterised in that** the step of forcing the material is operated by placing the tube (3) in a die (39) and by engaging a plunger (41) inside the tube (3).

9. Method as claimed in any one of the preceding claims, **characterised in that** the final thickness is less than 80% of the initial thickness.

10. Steering column (1) obtained by the method as claimed in any one of the preceding claims.
